# EUROPEAN PATENT APPLICATION

(11) **EP 2 246 800 A1**
(43) Date of publication of application: **03.11.2010**
(21) Application number: 09710803.9
(22) Date of filing: 22.01.2009
(51) Int. Cl.: G06F 21/20, H04L 9/32

(54) **PROCESS DISTRIBUTION SYSTEM, AUTHENTICATION SERVER, DISTRIBUTION SERVER, AND PROCESS DISTRIBUTION METHOD**

(30) Priority: 14.02.2008 JP 2008033333
(71) Applicant: NEC Corporation, Minato-ku Tokyo 108-8001 (JP)
(72) Inventor: INABA, Masaru, Tokyo 108-8001 (JP)
(74) Representative: Glawe, Delfs, Moll
(86) International application number: PCT/JP2009/050923
(87) International publication number: WO 2009/101848

(57) **Abstract**

In an authentication server performing an authentication process to authenticate a user using a terminal with the terminal by means of a TLS authentication in tunnel using a TLS parameter having preliminarily been acquired, user identification information and the TLS parameter are included in a transfer request signal, and transmitted to a distribution server, when user identification information transmitted from the terminal does not exist in an authentication database. A search is conducted in a distribution server database for authentication server identification information associated with the user identification information included in the transfer request signal. The user identification information and the TLS parameter are transmitted to the authentication server assigned with the authentication server identification information that has been searched for.

## Description

### Technical Field

The present invention relates to a process distribution system that distributes authentication processes, an authentication server, a distribution server, and a process distribution method.

### Background Art

In recent years, a growing number of techniques that are used to perform authentication processes for authenticating users who access a network or a system in order to use the network or the system and that permit use of the network or the system only for the successfully authenticated users, have been developed.

The authentication processes for authenticating a lot of users places a heavy processing load on authentication servers. Therefore, in order to lighten the processing load, there is a scheme where authentication servers are provided, a user profile database is divided, the authentication servers store the respective divided parts of the database, and the corresponding authentication servers perform the authentication processes.

For instance, a technique that divides authentication processes for authenticating users among authentication servers corresponding to user IDs transmitted from terminals has been developed (e.g., see JP2006-11989A).

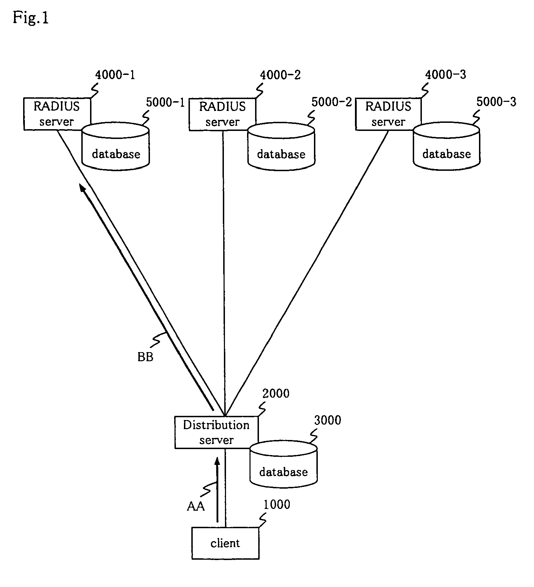

Figure 1 shows a configuration of a typical process distribution system.

In the process distribution system shown in Figure 1, user profile data of users are preliminarily distributed among databases 5000-1 to 5000-3, which are connected to RADIUS servers 4000-1 to 4000-3, respectively. Thus, pieces of user profile data stored in databases 5000-1 to 5000-3 are not redundant.

An authentication request is issued to the process distribution system shown in Figure 1 from client 1000 by a user using the system (arrow AA). Distribution server 2000 receives an authentication request signal transmitted from client 1000 for the sake of the authentication request. Distribution server 2000 extracts a user ID, which is user identification information for identifying a user and which is stored in a USER-NAME attribute in the RADIUS included in the received authentication request signal. The authentication server for authenticating the user (connected to the database storing the piece of user profile data of the user) is selected from among RADIUS servers 4000-1 to 4000-3 on the basis of the extracted user ID. This selection is made on the basis of an association between the user ID and authentication server identification information for identifying each of RADIUS servers 4000-1 to 4000-3, which have preliminarily been stored in database 3000 connected to distribution server 2000.

Exemplified here is a case where, the authentication server that authenticates the user who issued the authentication request, is RADIUS server 4000-1. Distribution server 2000 selects RADIUS server 4000-1. The authentication request signal transmitted from client 1000 is transferred to RADIUS server 4000-1 (arrow BB). RADIUS server 4000-1 then authenticates the user.

However, according to the above technique, in a case of storing a pseudo ID in the USER-NAME attribute of the RADIUS, as with the EAP (Extensible Authentication Protocol)-TTLS (Tunneled Transport Layer Security) authentication scheme, the distribution server cannot recognize the user ID. That is, if the pseudo ID is stored in the USER-NAME attribute of the RADIUS, the distribution server cannot recognize the original user ID of the client. Accordingly, this presents a problem in which the distribution server cannot select the authentication server, which is a destination and for identifying the user having transmitted the authentication request signal.

In the Diameter protocol, which is to succeed the RADIUS protocol, a mechanism of transferring an authentication packet, or the authentication request signal, to another authentication server by means of the Redirect-Host AVP has been developed. This mechanism can address the above problem. However, authentication procedures of the authentication process must be repeated from the beginning; this thereby presents a problem in which the efficiency of the authentication process is impaired.

### Disclosure of the Invention

An object of the present invention is to provide a process distribution system, an authentication server, a distribution server, and a process distribution method that resolve the above problem.

In order to achieve the above object, according to the present invention,
a process distribution system comprises: a terminal operated by a user; authentication servers performing an authentication process to authenticate the user with the terminal by means of a TLS authentication in tunnel using a TLS parameter that has been preliminarily acquired; and a distribution server distributing the authentication process to one of the authentication servers,
wherein the authentication server determines whether user identification information, that has been uniquely assigned to the user and that has been transmitted from the terminal via the distribution server, exists in an authentication database connected to the authentication server, and includes the user identification information and the TLS parameter into a transfer request signal indicating a transfer request of the user identification information and transmits the signal to the distribution server when determining that the user identification information does not exist in the authentication database, and
the distribution server searches a distribution server database connected to the distribution server for authentication server identification information associated with the user identification information on the basis of the user identification information included in the transfer request signal transmitted from the authentication server, and transmits the user identification information and the TLS parameter to the authentication server assigned with the authentication server identification information that has been searched for.

An authentication server performing an authentication process to authenticate a user, who is operating a terminal, by means of TLS authentication in tunnel with the terminal using a TLS parameter that has been preliminarily acquired, comprises:
an encryptor/decryptor that decrypts an authentication request signal requesting the authentication and that has been transmitted from the terminal, and extracting user identification information, which has been uniquely assigned to the user, from the decoded authentication request signal;
an authenticator that determines whether or not the user identification information extracted by the encryptor/decryptor exists in the authentication database connected to the authentication server; and
a distribution server interface that includes the user identification information and the TLS parameter in a transfer request signal indicating a transfer request of the user identification information and transmits the signal to the distribution server connected to the authentication server when determining that the user identification information does not exist in the authentication database.

A distribution server connected to a terminal operated by a user and authentication servers performing an authentication process to authenticate the user with the terminal by means of TLS authentication in tunnel using a TLS parameter having preliminarily been acquired, and distributing the authentication process to one of the authentication servers, comprises:
an authentication server interface that extracts the user identification information, which has been uniquely assigned to the user, from a transfer request signal indicating a transfer request of the user identification information and transmitted from the authentication server; and
a server selector that searches a distribution server database connected to the distribution server for authentication server identification information associated with the user identification information on the basis of the user identification information extracted by the authentication server interface,
wherein the authentication server interface transmits the user identification information and the TLS parameter transmitted from the authentication server, to the authentication server assigned with the authentication server identification information that was searched for by the server selector.

In a process distribution method in a process distribution system including a terminal operated by a user, in which authentication servers perform an authentication process to authenticate the user with the terminal by means of a TLS authentication in tunnel using a TLS parameter that has been preliminarily acquired, and in which a distribution server distributes the authentication process to one of the authentication servers,
the authentication server determines whether user identification information, which has been uniquely assigned to the user and which was transmitted from the terminal via the distribution server, exists in an authentication database connected to the authentication server,
the authentication server includes the user identification information and the TLS parameter in a transfer request signal indicating a transfer request of the user identification information and transmits the signal to the distribution server when determining that the user identification information does not exist in the authentication database,
the distribution server searches a distribution server database connected to the distribution server for authentication server identification information associated with the user identification information on the basis of the user identification information included in the transfer request signal transmitted from the authentication server, and
the distribution server transmits the user identification information and the TLS parameter to the authentication server assigned with the authentication server identification information that has been searched for.

As described above, the present invention adopts a configuration where authentication servers, which perform an authentication process to authenticate a user using a terminal with the terminal by means of a TLS authentication in tunnel using a TLS parameter having preliminarily been acquired, include user identification information and the TLS parameter in the transfer request signal and transmit the signal to the distribution server connected to the authentication servers when the user identification information transmitted from the terminal does not exist in an authentication database connected to the authentication server, and the distribution server searches a distribution server database connected to the distribution server for authentication server identification information associated with the user identification information included in the transfer request signal and transmits the user identification information and the TLS parameter to the authentication server assigned with the authentication server identification information that has been searched for. This configuration is capable of performing efficient authentication process distribution.

### Brief Description of the Drawings

Figure 1 shows a configuration of a typical process distribution system;
Figure 2 is a diagram showing an exemplary embodiment of a process distribution system of the present invention;
Figure 3 is a diagram showing an example of a configuration of a distribution server shown in Figure 2;
Figure 4 is a diagram showing an example of association information stored in a database shown in Figure 2;
Figure 5 is a diagram showing an example of authentication server information stored in the database shown in Figure 2;
Figure 6 is a diagram showing an example of a configuration of a RADIUS server shown in Figure 2;
Figure 7 is a diagram showing an example of information stored in the database shown in Figure 2;
Figure 8 is a diagram showing an example of information stored in the database shown in Figure 2;
Figure 9 is a diagram showing an example of information stored in the database shown in Figure 2;
Figure 10 is a sequence diagram for illustrating a process distribution method in a case where a user has a user ID "user 1" in the process distribution method in the configuration shown in Figures 2 to 9; and
Figure 11 is a sequence diagram for illustrating the process distribution method in a case where a user has a user ID "user 4" in the process distribution method in the configuration shown in Figures 2 to 9.

### Best Mode for Carrying Out the Invention

An exemplary embodiment of the present invention will hereinafter be described with reference to the drawings.

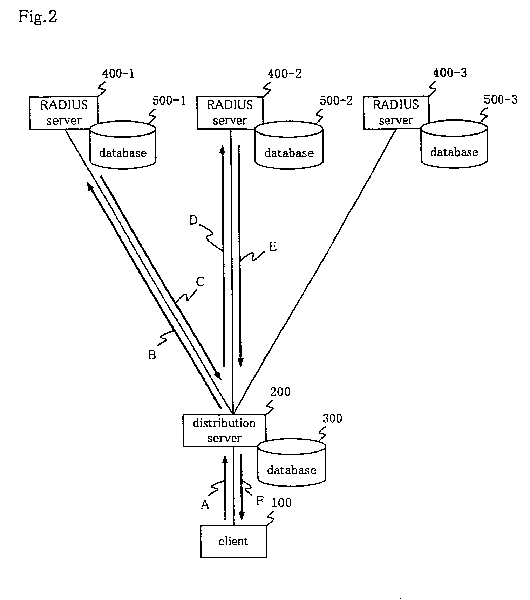

Figure 2 is a diagram showing an exemplary embodiment of a process distribution system of the present invention.

As shown in Figure 2, this exemplary embodiment includes client 100, distribution server 200, database 300, RADIUS servers 400-1 to 400-3 and databases 500-1 to 500-3. Here, an example including three RADIUS servers 400-1 to 400-3 and three databases 500-1 to 500-3 is described. However, needless to say, the number of elements may be two or four or more for each type of element.

Client 100 is a terminal that a user operates to issue an authentication request, and includes an input function for inputting information and a communication function for performing communication.

Distribution server 200 distributes authentication processes to authenticate users among RADIUS servers 400-1 to 400-3.

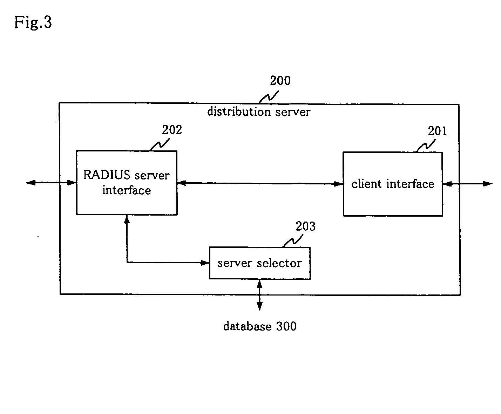

Figure 3 is a diagram showing an example of a configuration of distribution server 200 shown in Figure 2.

Distribution server 200 shown in Figure 2 includes client interface 201, RADIUS server interface 202 and server selector 203, as shown in Figure 3. Figure 3 only shows elements related to the present invention.

Client interface 201 includes an interface function interfacing with client 100 shown in Figure 2, and transmits and receives a signal to and from client 100. Client interface 201 outputs the signal transmitted from client 100 to RADIUS server interface 202. Client interface 201 transmits a signal to be transmitted to client 100 among the signals outputted from RADIUS server interface 202, to client 100.

RADIUS server interface 202 includes an interface function interfacing with RADIUS servers 400-1 to 400-3 shown in Figure 2, and is an authentication server interface that transmits and receives a signal to and from RADIUS servers 400-1 to 400-3. When a transfer request signal indicating a transfer request of the authentication request signal is transmitted from RADIUS servers 400-1 to 400-3, RADIUS server interface 202 extracts a user ID, which is user identification information included in the transfer request signal for identifying the user, and transmits the user ID to server selector 203. RADIUS server interface 202 transfers authentication request signal to any one of RADIUS servers 400-1 to 400-3 on the basis of a search result on the RADIUS servers at server selector 203. RADIUS server interface 202 transmits the signal outputted from client interface 201 to the appropriate server from among RADIUS servers 400-1 to 400-3. RADIUS server interface 202 outputs a signal other than the transfer request signals, transmitted from RADIUS servers 400-1 to 400-3, to client interface 201.

Server selector 203 searches for information stored in database 300 on the basis of the user ID outputted from RADIUS server interface 202, and selects the RADIUS server to which the authentication request signal is transferred, from among RADIUS servers 400-1 to 400-3.

Database 300 is connected to distribution server 200, and is a distribution server database storing information for determining to which server, from among RADIUS servers 400-1 to 400-3, distribution server 200 distributes the authentication process for authenticating the user. Database 300 stores, as this information, association information and authentication server information.

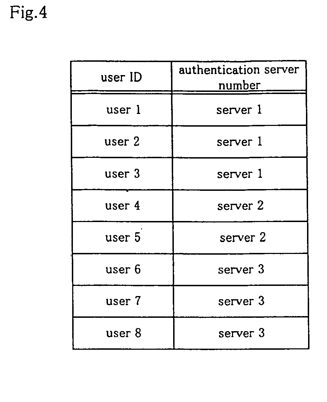

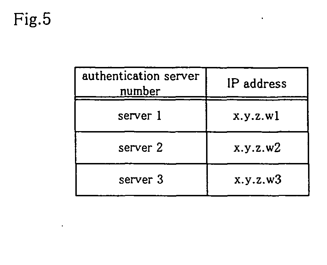

Figure 4 is a diagram showing an example of the association information stored in database 300 shown in Figure 2. Figure 5 is a diagram showing an example of the authentication server information stored in database 300 shown in Figure 2.

The association information stored in database 300 shown in Figure 2 associates the user ID, which is user identification information uniquely assigned to the user for identifying the user, and an authentication server number, which is authentication server identification information uniquely assigned to the RADIUS server for identifying RADIUS servers 400-1 to 400-3, with each other, as shown in Figure 4. This information indicates which database, from among databases 500-1 to 500-3, connected to respective RADIUS servers 400-1 to 400-3 stores the piece of user profile data of the user. That is, this information indicates the server at which the user can be authenticated from among RADIUS servers 400-1 to 400-3.

For instance, user ID "user 1" is associated with authentication server number "server 1"; this indicates that the RADIUS server that is to authenticate the user whose user ID is "user 1" is the RADIUS server whose authentication server number is "server 1". User ID "user 2" is associated with authentication server number "server 1"; this indicates that the RADIUS server that is to authenticate the user whose user ID is "user 2" is the RADIUS server whose authentication server number is "server 1". User ID "user 3" is associated with authentication server number "server 1"; this indicates that the RADIUS server that is to authenticate the user whose user ID is "user 3" is the RADIUS server whose authentication server number is "server 1". User ID "user 4" is associated with authentication server number "server 2"; this indicates that the RADIUS server that is to authenticate the user whose user ID is "user 4" is the RADIUS server whose authentication server number is "server 2". User ID "user 5" is associated with authentication server number "server 2"; this indicates that the RADIUS server that is to authenticate the user whose user ID is "user 5" is the RADIUS server whose authentication server number is "server 2". User ID "user 6" is associated with authentication server number "server 3"; this indicates that the RADIUS server that is to authenticate the user whose user ID is "user 6" is the RADIUS server whose authentication server number is "server 3". User ID "user 7" is associated with authentication server number "server 3"; this indicates that the RADIUS server that is to authenticate the user whose user ID is "user 7" is the RADIUS server whose authentication server number is "server 3". User ID "user 8" is associated with authentication server number "server 3"; this indicates that the RADIUS server that is to authenticate the user whose user ID is "user 8" is the RADIUS server whose authentication server number is "server 3".

Server selector 203 refers to this association information, thereby can select allowing the RADIUS server for authenticating the user with the user ID on the basis of the user ID outputted from RADIUS server interface 202.

The authentication server information stored in database 300 shown in Figure 2 associates the above-mentioned authentication server number with the IP address of the authentication server, as shown in Figure 5. This information indicates the IP address of the RADIUS server performing the authentication process for authenticating the user.

For instance, authentication server number "server 1" is associated with the IP address "x.y.z.w1"; this indicates the IP address of the RADIUS server whose authentication server number is "server 1" is "x.y.z.w1". Authentication server number "server 2" is associated with the IP address "x.y.z.w2"; this indicates the IP address of the RADIUS server whose authentication server number is "server 2" is "x.y.z.w2". Authentication server number "server 3" is associated with the IP address "x.y.z.w3"; this indicates the IP address of the RADIUS server whose authentication server number is "server 3" is "x.y.z.w3".

Server selector 203 refers to this association information, and selects the RADIUS server for authenticating the user with the user ID concerned. Subsequently, the IP address of the RADIUS server concerned can be acquired.

RADIUS servers 400-1 to 400-3 are authentication servers for authenticating the users.

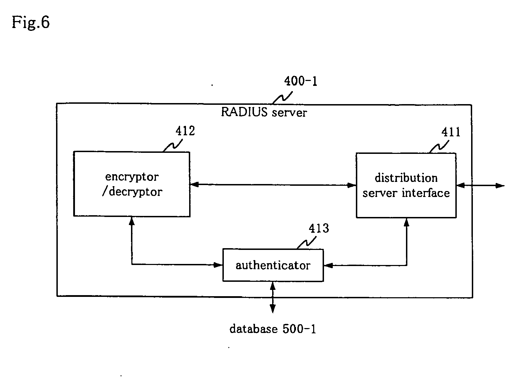

Figure 6 is a diagram showing an example of a configuration of RADIUS server 400-1 shown in Figure 2. Note that RADIUS servers 400-2 to 400-3 shown in Figure 2 have the same configuration as that of RADIUS server 400-1.

RADIUS server 400-1 shown in Figure 2 includes distribution server interface 411, encryptor/decryptor 412 and authenticator 413, as shown in Figure 6. Figure 6 only shows the elements related to the present invention.

Distribution server interface 411 includes an interface function interfacing with distribution server 200 shown in Figure 2, and transmits and receives a signal to and from distribution server 200. Distribution server interface 411 outputs the authentication request signal, which has been encrypted and transmitted from client 100 via distribution server 200, to encryptor/decryptor 412, when distribution server interface 411 performs a TLS (Transport Layer Security) tunnel communication, which is an encrypted communication, with client 100. Distribution server interface 411 includes a TLS parameter and the user ID outputted from authenticator 413 into the above-mentioned transfer request signal, and transmits the signal to server 200. Here, the TLS parameter, which is a parameter for encrypting and decrypting a signal such as the authentication request signal during the TLS tunnel communication, has already been acquired by means of a TLS handshake between RADIUS server 400-1 and client 100 in advance of the authentication. For instance, the Master-Secret (a random number for generating a cryptographic key), Cipher-Suite (a pair of an encryption algorithm and a hash algorithm) and Compression-Method (compression method) may be used. Distribution server interface 411 transmits (tunnel communication) the signal outputted from encryptor/decryptor 412 to client 100 via distribution server 200.

Encryptor/decryptor 412 decrypts the signal such as authentication request signal outputted from distribution server interface 411 using the TLS parameter. Encryptor/decryptor 412 extracts the user ID from the decrypted authentication request signal, and outputs the user ID to authenticator 413. Encryptor/decryptor 412 encrypts an authentication response signal outputted from authenticator 413, and outputs the signal to distribution server interface 411.

Authenticator 413 authenticates the authentication request signal outputted from encryptor/decryptor 412. More specifically, authenticator 413 refers to database 500-1, and outputs a password request signal, which requests a password as one of authentication response signals, to encryptor/decryptor 412 when the identical user ID to that included in the authentication request signal exists in database 500-1. When the password according to the password request signal is outputted from encryptor/decryptor 412, authenticator 413 authenticates the user ID by determining whether or not the password is associated with the user ID by database 500-1. When the password outputted from encryptor/decryptor 412 is associated with the user ID by database 500-1, authenticator 413 outputs an authentication response signal indicating a successful authentication, to encryptor/decryptor 412. When the identical user ID to that included in the authentication request signal does not exist in database 500-1, authenticator 413 outputs the user ID to distribution server interface 411.

Databases 500-1 to 500-3 are authentication server databases that store the user IDs of the users and the passwords in association with each other. Here, a case where database 300 shown in Figure 2 stores the association information shown in Figure 4 is described as an example.

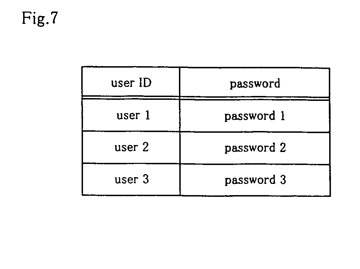

Figure 7 is a diagram showing an example of information stored in database 500-1 shown in Figure 2.

The information stored in database 500-1 shown in Figure 2 associates user ID "user 1" with password "password 1", as shown in Figure 7; this indicates that the password of the user whose user ID is "user 1" is "password 1". User ID "user 2" is associated with password "password 2"; this indicates that the password of the user whose user ID is "user 2" is "password 2". User ID "user 3" is associated with password "password 3"; this indicates that the password of the user whose user ID is "user 3" is "password 3". Database 500-1 stores the pieces of user profile data of user 1, user 2 and user 3.

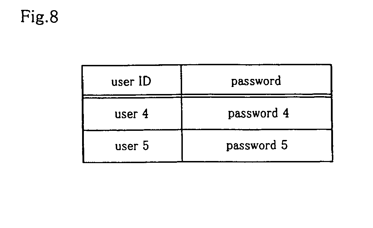

Figure 8 is a diagram showing an example of information stored in database 500-2 shown in Figure 2.

The information stored in database 500-2 shown in Figure 2 associates user ID "user 4" with password "password 4", as shown in Figure 8; this indicates that the password of the user whose user ID is "user 4" is "password 4". User ID "user 5" is associated with password "password 5"; this indicates that the password of the user whose user ID is "user 5" is "password 5". Database 500-2 stores the pieces of user profile data of user 4 and user 5.

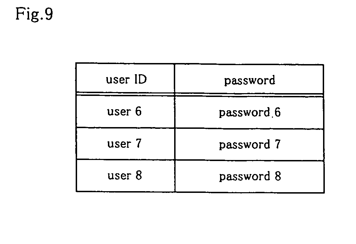

Figure 9 is a diagram showing an example of information stored in database 500-3 shown in Figure 2.

The information stored in database 500-3 shown in Figure 2 associates user ID "user 6" with password "password 6", as shown in Figure 9; this indicates that the password of the user whose user ID is "user 6" is "password 6". User ID "user 7" is associated with password "password 7"; this indicates that the password of the user whose user ID is "user 7" is "password 7". User ID "user 8" is associated with password "password 8"; this indicates that the password of the user whose user ID is "user 8" is "password 8". Database 500-3 stores the pieces of user profile data of user 6, user 7 and user 8.

A process distribution method in the above-mentioned exemplary embodiment will hereinafter be described. First, a case where the user, who is operating client 100 is the user whose user ID is "user 1", will be described as an example.

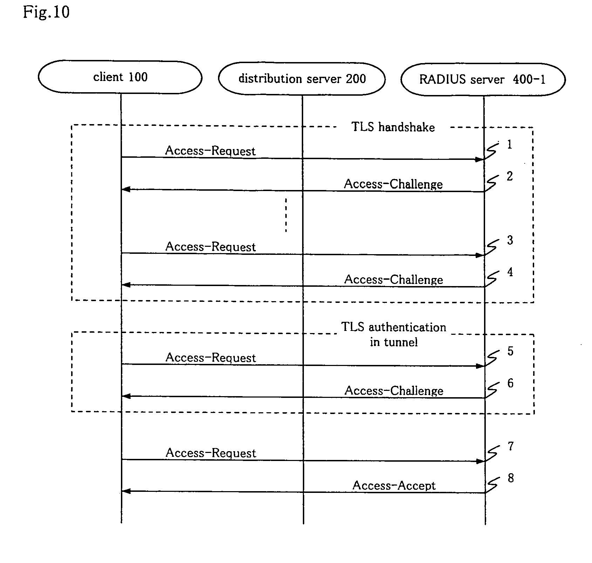

Figure 10 is a sequence diagram for illustrating a process distribution method in the case where the user has the user ID "user 1" in the process distribution method in the configuration shown in Figures 2 to 9.

First, a TLS handshake is preliminarily established between client 100 and any one of RADIUS servers 400-1 to 400-3. This is a preparation for a cryptographic communication referred to as the TLS tunnel communication between client 100 and RADIUS servers 400-1 to 400-3. When Access-Request, which is a request signal, is transmitted from client 100 to distribution server 200, RADIUS server interface 202 of distribution server 200 determines one RADIUS server, from among RADIUS servers 400-1 to 400-3, as the RADIUS server that will be a destination for Access-Request, and Access-Request is transferred to the RADIUS server that has been determined to be the destination in steps 1 and 3. Since a pseudo ID is used at this stage, accessing database 300 will not enable determining which RADIUS server holds the data of user 1. Accordingly, a method of determining the destination may be a method of random determination or a method of determination having a prescribed regularity such as a round robin. Here, a case where the destination is determined to be RADIUS server 400-1 is described as an example.

When the transferred Access-Request is received by RADIUS server 400-1, Access-Challenge, which is a response signal corresponding to received Access-Request, is transmitted from RADIUS server 400-1 to client 100 via distribution server 200 in steps 2 and 4. The TLS handshake is similar to a typical one. On the TLS handshake, the Master-Secret, Cipher-Suite and Compression-Method, which are TLS parameters required when the TLS tunnel communication is performed, are exchanged between client 100 and RADIUS server 400-l, and acquired by client 100 and RADIUS server 400-1.

Subsequently, an authentication process in tunnel is performed between client 100 and RADIUS server 400-1. In step 5, when Access-Request as the authentication request signal is transmitted from client 100 via distribution server 200, the authentication request signal received by distribution server interface 411 of RADIUS server 400-1 is decrypted by encryptor/decryptor 412 using the TLS parameter. The user ID is extracted from the authentication request signal decrypted by encryptor/decryptor 412; the user ID is identified at this stage for the first time. The extracted user ID is outputted from encryptor/decryptor 412 to authenticator 413.

Authenticator 413 refers to database 500-1, and searches database 500-1 for a user ID identical to the user ID outputted from encryptor/decryptor 412. Here, since a case where the user has user ID "user 1" is exemplified, the user ID is searched for from database 500-1.

When authenticator 413 searches for the user ID from database 500-1, Access-Challenge, as the authentication response signal, is transmitted from distribution server interface 411 to client 100 via distribution server 200, in step 6.

Subsequently, in steps 7 and 8, a packet including the password is exchanged between client 100 and RADIUS server 400-1, and the authentication is completed.

Next, a case where user operating client 100 is the user whose user ID is "user 4" is described as an example.

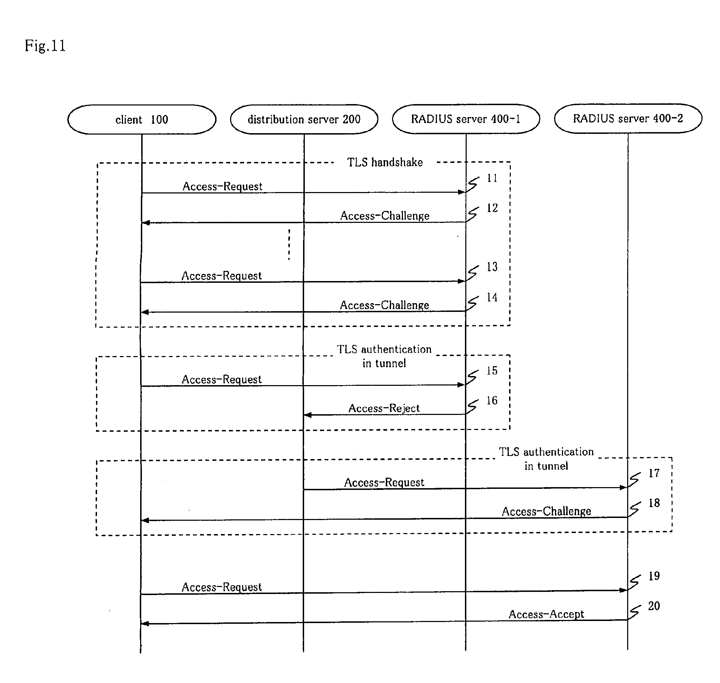

Figure 11 is a sequence diagram for illustrating the process distribution method in the case where the user has user ID "user 4" in the process distribution method in the configuration shown in Figures 2 to 9. Here, it is provided that the server, whose authentication server number stored in database 300 is "server 2", is RADIUS server 400-2.

First, as with steps 1 to 4, the preparation for the cryptographic communication referred to as the TLS tunnel communication is performed between client 100 and any one of RADIUS servers 400-1 to 400-3 using the TLS handshake in steps 11 to 14. These processes are identical to those of the above steps 1 to 4. As with the above example, a case where the destination is determined to be RADIUS server 400-1 is described as an example.

Subsequently, an authentication process in tunnel is performed between client 100 and RADIUS server 400-1. In step 15, when Access-Request as the authentication request signal is transmitted from client 100 via distribution server 200 (arrows A and B shown in Figure 2), the authentication request signal received by distribution server interface 411 of RADIUS server 400-1 is decrypted by encryptor/decryptor 412 using the TLS parameter. The user ID is extracted from the authentication request signal decrypted by encryptor/decryptor 412. The extracted user ID is outputted from encryptor/decryptor 412 to authenticator 413.

Authenticator 413 refers to database 500-1, and searches database 500-1 for a user ID identical to the user ID outputted from encryptor/decryptor 412. Here, since a case where the user has user ID "user 4" is exemplified, the user ID is not searched for from database 500-1.

The user ID is outputted from authenticator 413 to distribution server interface 411. In step 16, a transfer request signal, where an attribute indicating a transfer request has been added to Access-Reject including the user ID and the above TLS parameter, is transmitted from distribution server interface 411 to distribution server 200 (arrow C shown in C). Since the attribute here is not supported by the standard attributes of RADIUS, an attribute specific to Vendor Specific Attribute is used. The contents of the required attribute are as follows:
- indicating the transfer request when Access-Reject is accompanied (similar to Diameter Redirect-Host AVP);
- storing TLS Master-Secret;
- storing TLS Cipher-Suite;
- storing TLS Compression-Method; and
- storing the user ID received in a TLS authentication in tunnel.

When RADIUS server interface 202 of distribution server 200 receives the transfer request signal transmitted from distribution server interface 411 of RADIUS server 400-1, the user ID is extracted from the received transfer request signal by RADIUS server interface 202. The extracted user ID is outputted from RADIUS server interface 202 to server selector 203.

Server selector 203 searches for the RADIUS server as the destination from among RADIUS servers 400-1 to 400-3 on the basis of the extracted user ID. More specifically, server selector 203 refers to database 300, and acquires the authentication server number associated with the extracted user ID, from the association information of database 300. Server selector 203 acquires the IP address of the acquired authentication server number from the authentication server information of database 300. Here, since user ID is "user 4", authentication server number "server 2" (RADIUS server 400-2) is acquired. Since "server 2" is acquired as the authentication server number, the IP address "x.y.z.w2" is acquired. The acquired IP address is outputted from server selector 203 to RADIUS server interface 202.

RADIUS server interface 202 adds the attribute that stores the TLS parameter and the attribute that stores the user ID to Access-Request. Subsequently, in step 17, this Access-Request is transmitted from RADIUS server interface 202 to RADIUS server 400-2, which has the IP address outputted from server selector 203 (arrow D shown in Figure 2).

When RADIUS server 400-2 determines the presence of the added attribute, diversion of the TLS parameter added together negates the need for reestablishing the handshake between client 100 and RADIUS server 400-2; an authentication packet after the TLS handshake is regarded as the beginning of the TLS authentication in tunnel. In step 18, an authentication result is transmitted from RADIUS server 400-2 to client 100 via distribution server 200 (arrows E and F shown in Figure 2). Subsequently, in steps 19 and 20, a packet is exchanged among client 100, distribution server 200 and RADIUS server 400-2, and the authentication is completed.

The user ID is described using the example in which the user ID is uniquely assigned. However, the user ID may be assigned in a manner specific to the terminal of client 100.

Database 300 may be included in distribution server 200. Databases 500-1 to 500-3 may be included in RADIUS servers 400-1 to 400-3, respectively.

As described above, in a case where the user ID cannot be identified in the early stages of the message exchange, as in the EAP-TTLS authentication scheme, transfer of the information acquired by the TLS handshake negates the need for repeating the authentication procedures from the beginning and can continue the authentication by another authentication server, thereby allowing the distribution of the process to be efficiently performed.

The present invention has been described above with reference to the exemplary embodiment. However, the present invention is not limited to the above exemplary embodiment. Various modifications that those skilled in the art can understand may be made within the scope of the present invention to the configuration and details of the present invention.

This application claims the benefit of priority from Japanese Patent Application No. 2008-033333, filed on February 14, 2008, the entire contents of which are incorporated herein by reference.

## Claims

1. A process distribution system comprising: a terminal operated by a user;
authentication servers performing an authentication process to authenticate the user with the terminal by means of a TLS authentication in tunnel using a TLS parameter that has been preliminarily acquired; and a distribution server distributing the authentication process to one of the authentication servers,
wherein the authentication server determines whether user identification information, that has been uniquely assigned to the user and that has been transmitted from the terminal via the distribution server exists in an authentication database connected to the authentication server, and includes the user identification information and the TLS parameter in a transfer request signal indicating a transfer request of the user identification information and transmits the signal to the distribution server when the authentication server determines that the user identification information does not exist in the authentication database, and
the distribution server searches a distribution server database connected to the distribution server for authentication server identification information associated with the user identification information on the basis of the user identification information included in the transfer request signal transmitted from the authentication server, and transmits the user identification information and the TLS parameter to the authentication server assigned with the authentication server identification information that has been searched for.

2. The process distribution system according to claim 1,
wherein the authentication server extracts the user identification information from the authentication request signal requesting the authentication and that was transmitted from the terminal via the distribution server, and determines whether the extracted user identification information exists in the authentication database or not.

3. The process distribution system according to claim 2,
wherein the authentication server comprises:
an encryptor/decryptor that decrypts the authentication request signal transmitted from the terminal via the distribution server, and extracts the user identification information from decrypted authentication request signal;
an authenticator that determines whether or not the user identification information extracted by the encryptor/decryptor exists in the authentication database; and
a distribution server interface that includes the user identification information and the TLS parameter in the transfer request signal and transmits the signal to the distribution server when the distribution server interface determines that the user identification information does not exist in the authentication database,
the distribution server comprises:
an authentication server interface that extracts the user identification information from the transfer request signal transmitted from the authentication server; and
a server selector that searches the distribution server database connected to the distribution server for the authentication server identification information associated with the user identification information on the basis of the user identification information extracted by the authentication server interface, and
the authentication server interface transmits the user identification information and the TLS parameter to the authentication server assigned with the authentication server identification information that has been searched for by the server selector.

4. The process distribution system according to claim 1 or 2,
wherein the authentication server comprises the authentication server database.

5. The process distribution system according to claim 1 or 2,
wherein the distribution server comprises the distribution server database.

6. An authentication server performing an authentication process to authenticate a user, who is operating a terminal, by means of a TLS authentication in tunnel with the terminal using a TLS parameter that has been preliminarily acquired, comprising:
an encryptor/decryptor that decrypts an authentication request signal requesting the authentication and that has been transmitted from the terminal, and extracts user identification information, which has been uniquely assigned to the user, from the decrypted authentication request signal;
an authenticator that determines whether or not the user identification information extracted by the encryptor/decryptor exists in the authentication database connected to the authentication server; and
a distribution server interface that includes the user identification information and the TLS parameter in a transfer request signal indicating a transfer request of the user identification information and transmits the signal to the distribution server connected to the authentication server when the distribution server interface determines that the user identification information does not exist in the authentication database.

7. The authentication server according to claim 6, comprising the authentication server database.

8. A distribution server connected to a terminal operated by a user and authentication servers performing an authentication process to authenticate the user with the terminal by means of a TLS authentication in a tunnel using a TLS parameter that has been preliminarily acquired, and distributing the authentication process to one of the authentication servers, comprising:
an authentication server interface that extracts user identification information which has been uniquely assigned to the user from a transfer request signal indicating a transfer request of the user identification information and that has been transmitted from the authentication server; and
a server selector that searches a distribution server database connected to the distribution server for authentication server identification information associated with the user identification information on the basis of the user identification information extracted by the authentication server interface,
wherein the authentication server interface transmits the user identification information and the TLS parameter transmitted from the authentication server to the authentication server assigned with the authentication server identification information that has been searched for by the server selector.

9. The distribution server according to claim 8, comprising the distribution server database.

10. A process distribution method in a process distribution system including a terminal operated by a user, authentication servers performing an authentication process to authenticate the user with the terminal by means of a TLS authentication in a tunnel using a TLS parameter that has been preliminarily acquired, and a distribution server distributing the authentication process to one of the authentication servers,
wherein the authentication server determines whether user identification information which has been uniquely assigned to the user and which was transmitted from the terminal via the distribution server exists in an authentication database connected to the authentication server,
the authentication server includes the user identification information and the TLS parameter in a transfer request signal indicating a transfer request of the user identification information and the authentication server transmits the signal to the distribution server when the authentication server determines that the user identification information does not exist in the authentication database,
the distribution server searches a distribution server database connected to the distribution server for authentication server identification information associated with the user identification information on the basis of the user identification information included in the transfer request signal transmitted from the authentication server, and
the distribution server transmits the user identification information and the TLS parameter to the authentication server assigned with the authentication server identification information that has been searched for.

11. The process distribution method according to claim 10, comprising:
a process in which the authentication server extracts the user identification information from an authentication request signal requesting the authentication and that was transmitted from the terminal via the distribution server; and
a process in which the authentication server determines whether or not the extracted user identification information exists in the authentication database.
